# EUROPÄISCHE PATENTSCHRIFT

(11) **EP 2 133 291 B1**
(45) Veröffentlichungstag und Bekanntmachung des Hinweises auf die Patenterteilung: **01.08.2012**
(21) Anmeldenummer: 08010541.4
(22) Anmeldetag: 10.06.2008
(51) Int. Cl.: B65G 43/08, B65G 47/26, G05B 19/418

(54) **Fördersystem mit von Logikmodulen angesteuerten Fördersegmenten**
Conveying system with conveying segments controlled by logic modules
Système de transport doté de segments de transport commandés par des modules logiques

(43) Veröffentlichungstag der Anmeldung: 16.12.2009
(73) Patentinhaber: SICK AG, 79183 Waldkirch (DE)
(72) Erfinder: Blümcke, Thomas, 79312 Emmendingen (DE); Moritz, Frank, 79102 Freiburg (DE); Imhof, Andreas, 79016 Freiburg (DE)
(74) Vertreter: Manitz, Finsterwald & Partner GbR

(56) Entgegenhaltungen:
- US-A1- 2006 030 968

## Beschreibung

Die vorliegende Erfindung betrifft ein Fördersystem mit einer Mehrzahl von Fördersegmenten, bei dem den Fördersegmenten jeweils ein separates Logikmodul zugeordnet ist, welches jeweils zumindest einen Sensoreingang und zumindest einen Steuerausgang für ein Antriebselement des jeweiligen Fördersegments aufweist, und bei dem als Fördersegmente Linearsegmente und zumindest ein Weichensegment vorgesehen sind, wobei das dem Weichensegment zugeordnete Logikmodul einen zusätzlichen Steuerausgang für ein weiteres Antriebselement aufweist, welches eine Merge- oder Divertfunktion steuert.

Derartige Fördersysteme werden in logistischen und fördertechnischen Anwendungen eingesetzt und dienen dazu, Güterströme unter Realisierung von Weichenfunktionen zu steuern. Insbesondere werden hier Güterströme mittels Merge-Weichenfunktionen zusammengeführt oder mittels Divert-Weichenfunktionen auf unterschiedliche Ströme aufgeteilt.

Da es beispielsweise beim Einsatz von Stauförderern nötig ist, verschiedene Förderbereiche unabhängig voneinander und/oder mit verschiedenen Geschwindigkeiten zu betreiben, ist es üblich, jedem einzelnen Fördersegment eines Fördersystems ein eigenes Logikmodul zuzuordnen, welches dann die Steuerung des Fördersegments übernimmt. Um eine solche Steuerung realisieren zu können, ist es nötig, dass jeder Einheit aus Fördersegment und Logikmodul ein Sensor zugeordnet ist, welcher auf dem jeweiligen Fördersegment befindliche Objekte erfassen kann. Ferner ist jeder Einheit aus Fördersegment und Logikmodul ein Antriebselement zugeordnet, welches eine Förderbewegung des jeweiligen Fördersegments auslösen kann, sobald es vom Logikmodul entsprechend beaufschlagt wird. Um die hierfür nötige Kommunikation zwischen Sensor, Antriebselement und Logikmodul zu ermöglichen, besitzt jedes Logikmodul einen Sensoreingang für den genannten Sensor sowie einen Steuerausgang für das genannte Antriebselement.

Als Logikmodule für die Ansteuerung von Weichensegmenten werden gemäß Stand der Technik beispielsweise speicherprogrammierbare Steuerungen eingesetzt, die je nach Anwendungsfall entsprechend programmiert werden müssen, um so dazu in die Lage versetzt zu werden, Sensorsignale auszuwerten, Weichenfunktionen zu steuern und Förderantriebe zu beaufschlagen. Als Logikmodule für die Ansteuerung von Linearsegmenten werden gemäß Stand der Technik hingegen fest verdrahtete oder frei programmierbare Module eingesetzt, die dazu in der Lage sind, Sensorsignale auszuwerten und Antriebselemente von Fördersegmenten anzusteuern.

Nachteilig an diesen bekannten Systemen ist die Tatsache, dass die speicherprogrammierbaren Steuerungen zur Ansteuerung der Weichensegmente und die Module zur Ansteuerung der Linearsegmente nicht aneinander angepasst sind, so dass die Verdrahtung und Programmierung für jeden Anwendungsfall separat und individuell erfolgen muss, was einen erheblichen Konfigurations- und Parametrieraufwand bedingt. Zudem ist von Nachteil, dass die für die Weichensegmente verwendeten speicherprogrammierbaren Steuerungen nur mit einem relativ hohen wirtschaftlichen Aufwand herstellbar sind, so dass sich dies auf die Wirtschaftlichkeit des gesamten Fördersystems nachteilig auswirkt. Schließlich ist es auch von Nachteil, dass zwischen den Logikmodulen zur Ansteuerung der Linearsegmente und den für die Weichensegmente vorgesehenen speicherprogrammierbaren Steuerungen nur sehr begrenzte Kommunikationsmöglichkeiten bestehen.

Die US 2006/030968 A1 offenbart eine Controller-Karte für Förderanlagen, welche einen Logikcontroller sowie mehrere Antriebsmotor-Controller integriert und eine Vielzahl von unterschiedlichen Funktionen bereitstellt. Die Karte enthält zwei Mikroprozessoren und ist in der Lage, zahlreiche Antriebsmotoren für Fördersegmente in mehreren Zonen logisch zu verschalten und gemäß einem vorgegebenen Programm anzusteuern. Bestimmten Segmenten einer Förderanlage kann jeweils eine eigene Controller-Karte zugeordnet sein, was jedoch mit einem relativ hohen Aufwand verbunden ist.

Eine Aufgabe der Erfindung besteht darin, ein Fördersystem bereitzustellen, welches sich mit einem vergleichsweise geringen wirtschaftlichen Aufwand realisieren lässt, wobei insbesondere der zu betreibende Konfigurations- und Parametrieraufwand gegenüber bisher bekannten Systemen reduziert werden soll.

Diese Aufgabe wird erfindungsgemäß dadurch gelöst, dass zwei unterschiedliche Typen von Logikmodulen vorgesehen sind, von denen ein Lineartyp für die Ansteuerung von einem Linearsegment und ein Weichentyp für die Ansteuerung von einem Weichensegment vorgesehen sind, und dass die Sensoreingänge und/oder die Steuerausgänge für die Antriebselemente bei allen Logikmodulen identisch ausgebildet sind

Erfindungsgemäß werden also für die Ansteuerung von Linearsegmenten und Weichensegmenten jeweils Logikmodule eingesetzt, denen ein einheitliches Konzept zugrunde liegt, welches zumindest dadurch begründet ist, dass bei beiden Typen von Logikmodulen jeweils Sensoreingänge und/ oder Steuerausgänge verwendet werden, die sich von Logikmodul zu Logikmodul nicht voneinander unterscheiden. Insofern wird es auf vorteilhafte Weise möglich, beide Arten von Logikmodulen unter Zugrundelegung eines einheitlichen Verkabelungskonzepts mit Sensoren und Antriebselementen zu verdrahten. Es muss bezüglich der Kopplung zwischen Logikmodulen einerseits und Sensoren bzw. Antriebselementen andererseits erfindungsgemäß also kein nennenswerter Konfigurations- und Parametrieraufwand betrieben werden, da bei allen eingesetzten Logikmodulen von vorne herein klar definiert ist, in welcher Weise und an welchen physikalischen Positionen Sensoren bzw. Antriebselemente jeweils angeschlossen werden müssen.

Das erfindungsgemäß einheitliche Verkabelungskonzept bezieht sich somit auf die Verbindung zwischen Logikmodul und Sensor, zwischen Logikmodul und Antriebselement des jeweiligen Fördersegments und - bei der Ansteuerung von Weichensegmenten - auf die Verbindung zwischen Logikmodul und demjenigen Antriebselement welches eine Merge- oder Divertfunktion steuert. Bevorzugt ist es dabei, wenn jedem Fördersegment genau ein erfindungsgemäßes Logikmodul zugeordnet wird.

Vorteilhaft ist es, wenn die physikalische Verbindung zwischen allen Sensoreingängen und den daran jeweils angeschlossenen Sensoren und/oder die physikalische Verbindung zwischen allen Steuerausgängen und den daran jeweils angeschlossenen Antriebselementen bei allen Logikmodulen identisch ausgebildet sind. In diesem Fall können für den Anschluss aller Sensoren und/oder Antriebselemente bei allen Logikmodulen jeweils die gleichen Kabel, Stecker und Buchsen zum Einsatz gelangen, was das erfindungsgemäße, übersichtliche Verkabelungskonzept zusätzlich vereinheitlicht und vereinfacht. Insbesondere bestehen dann hinsichtlich der Verkabelung von Lineartyp-Logikmodulen und Weichentyp-Logikmodulen keinerlei Unterschiede.

Auf die Wirtschaftlichkeit des erfindungsgemäßen Fördersystems wirkt es sich besonders vorteilhaft aus, wenn alle Lineartyp-Logikmodule eine untereinander identische Hardware aufweisen. In diesem Fall müssen für die Ansteuerung von Linearsegmenten keine unterschiedlichen Logikmodule bereitgestellt werden. In entsprechender Weise ist es vorteilhaft, wenn alle Weichentyp-Logikmodule eine untereinander identische Hardware aufweisen, so dass dann im gesamten Fördersystem nur exakt zwei unterschiedliche Arten von Logikmodulen existieren, von denen eine Art zur Ansteuerung von Linearsegmenten und die andere Art zur Ansteuerung von Weichensegmenten geeignet ist.

Alternativ ist es jedoch auch möglich, zwei bezüglich ihrer Hardware unterschiedliche Weichentyp-Logikmodule bereitzustellen, von denen die einen zur Ansteuerung eines Merge-Weichensegments und die anderen zur Ansteuerung eines Divert-Weichensegments ausgelegt sind. In diesem Fall existieren im gesamten Fördersystem dann insgesamt drei unterschiedliche Arten von Logikmodulen, was ebenfalls noch eine sehr wirtschaftliche Realisierung ermöglicht.

Die Lineartyp-Logikmodule weisen bevorzugt eine Schnittstelle für ein Vorgänger-Logikmodul und eine Schnittstelle für ein Nachfolger-Logikmodul auf. Über die Schnittstelle zum Nachfolger-Logikmodul kann dem Lineartyp-Logikmodul mitgeteilt werden, ob sich auf demjenigen Fördersegment, welches dem Nachfolger-Logikmodul zugeordnet ist, gerade ein Objekt befindet. Wenn das Nachfolger-Logikmodul an das Lineartyp-Logikmodul meldet, dass sich kein Objekt auf dem zugeordneten Fördersegment befindet, kann das Lineartyp-Logikmodul das ihm zugeordnete Linearsegment derart ansteuern, dass ein Fördern des darauf befindlichen Objekts zu demjenigen Fördersegment erfolgt, welches dem Nachfolger-Logikmodul zugeordnet ist. In entsprechender Weise kann das Lineartyp-Logikmodul über seine Schnittstelle an das jeweilige Vorgänger-Logikmodul melden, ob sich auf demjenigen Linearsegment, das dem Lineartyp-Logikmodul zugeordnet ist, gerade ein Objekt befindet. In Abhängigkeit von dieser Information kann dann das Vorgänger-Logikmodul das ihm zugeordnete Fördersegment ansteuern. Das genannte Steuerungsprinzip wird nachfolgend im Rahmen der Figurenbeschreibung noch näher erläutert.

Wenn das Weichentyp-Logikmodul zur Ansteuerung eines Divert-Weichensegments geeignet ist, besitzt es bevorzugt eine Schnittstelle für ein Vorgänger-Logikmodul und zumindest zwei Schnittstellen für zwei Nachfolger-Logikmodule. Wenn das Weichentyp-Logikmodul zur Ansteuerung eines Merge-Weichensegments geeignet ist, besitzt es zumindest zwei Schnittstellen für zwei Vorgänger-Logikmodule und eine Schnittstelle für ein Nachfolger-Logikmodul. Wie bereits erwähnt, können also zwei unterschiedliche Hardwaretypen von Weichentyp-Logikmodulen existieren, von denen der eine Typ die Ansteuerung eines Merge-Weichensegments und der andere Typ für die Ansteuerung eines Divert-Weichensegments geeignet ist. Wenn für die Weichentyp-Logikmodule jedoch eine einheitliche Hardware verwendet werden soll, ist es möglich, diese mit zwei Schnittstellen für zwei Vorgänger-Logikmodule und mit zwei Schnittstellen für zwei Nachfolger-Logikmodule auszustatten oder insgesamt drei Schnittstellen vorzusehen, die wahlweise für Vorgänger- oder Nachfolger-Logikmodule verwendet werden können. Derartige Weichentyp-Logikmodule können dann sowohl zur Ansteuerung eines Merge-Weichensegments als auch zur Ansteuerung eines Divert-Weichensegments eingesetzt werden.

Die vorliegende Erfindung ist nicht darauf beschränkt, dass ein Weichentyp-Logikmodul nur solchen Weichensegmenten zugeordnet werden kann, welche Objektströme von zwei Spuren zusammenführen oder einen Objektstrom auf zwei Spuren aufteilen, vielmehr ist auch ein Zusammenführen von drei oder mehr Spuren oder ein Aufteilen auf drei oder mehr Spuren möglich. In diesem Fall weisen dann die Weichentyp-Logikmodule drei oder mehr Schnittstellen für drei oder mehr Nachfolger-Logikmodule und/oder drei oder mehr Schnittstellen für drei oder mehr Vorgänger-Logikmodule auf.

Besonders vorteilhaft ist es, wenn die Schnittstellen für die Vorgänger-und Nachfolger-Logikmodule bei allen Logikmodulen identisch ausgebildet sind. Dies bedingt dann wieder die bereits erwähnten Vorteile eines einheitlichen und durchgängigen Verkabelungskonzepts, welches zusätzlich optimiert werden kann, wenn auch die physikalischen Verbindungen zwischen allen Paaren von zwei benachbarten Logikmodulen identisch ausgebildet werden. In diesem Fall ist dann wieder die Verwendung von identischen Steckern, Buchsen und Kabeln möglich, so dass weder bei verschiedenen miteinander verbundenen Logikmodulen noch bei unterschiedlichen Anwendungen des erfindungsgemäßen Fördersystems Unterschiede in der Verkabelung bestehen.

Weiterhin ist es besonders vorteilhaft, wenn zumindest ein, bevorzugt alle Weichentyp-Logikmodule eine Systemschnittstelle zur Kopplung mit einem Steuerungsrechner aufweisen. Auf diese Weise wird es möglich, von einem zentralen Steuerungsrechner Konfigurations- und Parametrierinformation an ein, mehrere oder alle Weichentyp-Logikmodule zu übertragen, so dass diese Information zentral vorgehalten werden kann.

Besonders bevorzugt ist es, wenn eine, mehrere oder alle der Schnittstellen der Logikmodule unidirektional oder bidirektional betreibbar sind. Wenn ein bidirektionaler Betrieb möglich ist, kann eine beliebige Kommunikation zwischen den einzelnen Logikmodulen, zwischen Logikmodulen und Sensoren, zwischen Logikmodulen und Antriebselementen sowie zwischen Logikmodulen und einem zentralen Steuerungsrechner erfolgen. Insbesondere wird es möglich, dass Konfigurations- und Parametrierinformationen, die von einem zentralen Steuerungsrechner an die Weichentyp-Logikmodule übertragen werden, von diesen Weichentyp-Logikmodulen an die jeweils vor- oder nachgeordneten Lineartyp-Logikmodule übertragen werden. In diesem Fall wird die genannte Information dann bezogen auf einen Förderabschnitt zentral in einem Weichentyp-Logikmodul vorgehalten, von wo aus sie an alle nachgeordneten Lineartyp-Logikmodule (downstream) oder an alle vorgeordneten Lineartyp-Logikmodule (upstream) übertragen werden kann. Die Übertragung erfolgt dabei bevorzugt immer nur an diejenigen Lineartyp-Logikmodule, die zwischen zwei Weichentyp-Logikmodulen angeordnet sind.

Bei bidirektionaler Kommunikation zwischen den Logikmodulen ist es letztlich auch möglich, dass alle zwischen zwei Weichentyp-Logikmodulen angeordnete Lineartyp-Logikmodule Statusinformationen an genau ein gemeinsames Weichentyp-Logikmodul übermitteln. Diese Statusinformation kann dann vom jeweiligen Weichentyp-Logikmodul wiederum an einen zentralen Steuerungsrechner übertragen werden.

Weitere bevorzugte Ausführungsformen der Erfindung sind in den Unteransprüchen erläutert.

Die Erfindung wird nachfolgend anhand von drei Ausführungsbeispielen unter Bezugnahme auf die Zeichnungen erläutert; in diesen zeigen:
- Fig. 1: eine schematische Darstellung eines erfindungsgemäßen Fördersystems mit einem Divert-Weichensegment,
- Fig. 2: eine schematische Darstellung eines erfindungsgemäßen Fördersystems mit einem Merge-Weichensegment, und
- Fig. 3: eine schematische Darstellung eines erfindungsgemäßen Fördersystems, das ausschließlich Linearsegmente aufweist.

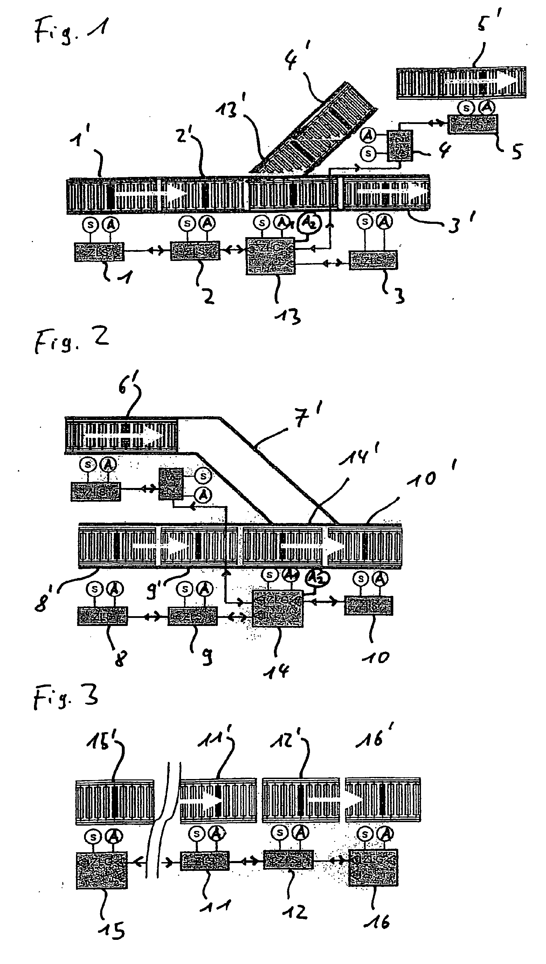

Fig. 1 zeigt ein Fördersystem, welches insgesamt fünf Linearsegmente 1', 2', 3', 4', 5' und ein Weichensegment 13' aufweist, wobei das Weichensegment 13' als Divert-Weichensegment ausgebildet ist, welches dazu in der Lage ist, einen Objektstrom auf zwei Objektströme aufzuteilen. Die Förderrichtung ist in allen Figuren jeweils durch weiße Pfeile angedeutet. In Förderrichtung vor dem Divert-Weichensegment 13' befinden sich zwei in Förderrichtung aneinander angrenzende Linearsegmente 1', 2'. Ausgangsseitig schließen an das Divert-Weichensegment 13' einerseits das Linearsegment 3' für den einen Objektstrom und die Linearsegmente 4', 5' für den anderen Objektstrom an.

Erfindungsgemäß wird jedem Fördersegment 1' bis 5', 13' jeweils ein Logikmodul 1 bis 5, 13 zugeordnet, wobei die Logikmodule 1 bis 5, die jeweils Linearsegmenten 1' bis 5' zugeordnet sind, dem erfindungsgemäßen Lineartyp entsprechen, wohingegen das dem Divert-Weichensegment 13' zugeordnete Logikmodul 13 dem erfindungsgemäßen Weichentyp entspricht.

Jedes Logikmodul 1 bis 5, 13 weist einen Sensoreingang für einen jeweils anzuschließenden Sensor S auf. Dieser Sensor S ist jeweils dazu in der Lage, dasjenige Fördersegment 1' bis 5', 13', das dem Logikmodul 1 bis 5, 13, an welches der jeweilige Sensor S angeschlossen ist, zugeordnet ist, daraufhin zu überwachen, ob sich auf dem jeweiligen Fördersegment 1' bis 5', 13' gerade ein Objekt befindet. Die entsprechende Information wird dann über die jeweilige Sensorschnittstelle an das dem betreffenden Fördersegment 1' bis 5', 13' zugeordnete Logikmodul 1 bis 5, 13 übertragen.

Weiterhin besitzt jedes Lineartyp-Logikmodul 1 bis 5 einen Steuerausgang für ein Antriebselement A, welches jeweils dazu in der Lage ist, das dem Lineartyp-Logikmodul 1 bis 5 zugeordnete Linearsegment 1' bis 5' derart anzutreiben, dass ein darauf befindliches Objekt in Förderrichtung zum nächsten Fördersegment bewegt wird.

Das Weichentyp-Logikmodul 13 besitzt hingegen zwei Steuerausgänge für zwei Antriebselemente A₁, A₂, wobei das Antriebselement A₁ eine Förderfunktion des Divert-Weichensegments 13' auslöst, wohingegen das Antriebselement A₂ dazu geeignet ist, die Weichenfunktion des Divert-Weichensegments 13' zu steuern. Mittels einer entsprechenden Beaufschlagung des Antriebselements A₂ durch das Weichentyp-Logikmodul 13 kann also gesteuert werden, ob sich ein auf dem Divert-Weichensegment 13' befindliches Objekt entweder in Richtung des Linearsegments 3' oder in Richtung des Linearsegments 4' bewegt.

Jedes der Logikmodule 1 bis 5, 13 ist jeweils über geeignete Schnittstellen mit dem jeweiligen Vorgänger-Logikmodul und mit dem jeweiligen Nachfolger-Logikmodul verbunden. Über die entsprechenden Verbindungen können gemäß den in Fig. 1 eingezeichneten Pfeilen Daten bidirektional zwischen benachbarten Logikmodulen übertragen werden. Eine Besonderheit stellt hierbei das Weichentyp-Logikmodul 13 dar, da dieses entsprechend der Weichenfunktion des Divert-Weichensegments 13' mit einem Vorgänger-Logikmodul 2 und zwei Nachfolger-Logikmodulen 3, 4 verbunden ist.

Zudem ist das Weichentyp-Logikmodul 13 mit einer Schnittstelle für einen übergeordneten Steuerungsrechner (nicht dargestellt) ausgestattet, über welchen das Weichentyp-Logikmodul 13 Konfigurations- und Parametrierdaten vom Steuerungsrechner empfangen, aber auch Statusinformationen an den Steuerungsrechner übertragen kann.

Bei einer bevorzugten Ausführungsform des erfindungsgemäßen Fördersystems empfängt das Weichentyp-Logikmodul 13 also Konfigurationsund Parametrierinformation vom Steuerungsrechner und überträgt diese beispielsweise an alle in Förderrichtung hinter dem Weichentyp-Logikmodul 13 befindlichen Lineartyp-Logikmodule 3 bis 5 (UpstreamÜbertragung). Die in Förderrichtung vor dem Weichentyp-Logikmodul 13 angeordneten Lineartyp-Logikmodule 1, 2 empfangen entsprechende Konfigurations- und Parametrierdaten von einem weiteren, nicht dargestellten Weichentyp-Logikmodul, welches in Förderrichtung vor den Lineartyp-Logikmodulen 1, 2 angeordnet ist.

Beim Betrieb eines Fördersystems gemäß Fig. 1 kooperieren zwei aufeinander folgende Fördersegmente 1', 2' beispielsweise wie folgt:

Das Logikmodul 2 stellt über den ihm zugeordneten Sensor S fest, dass sich kein Objekt auf dem Fördersegment 2' befindet und teilt dies dem Logikmodul 1 mit, welches dem Fördersegment 1' zugeordnet ist, das sich in Förderrichtung vor dem Fördersegment 2' befindet. Aufgrund dieser Information ist dem Logikmodul 1 bekannt, dass das Fördersegment 2' frei ist, so dass es grundsätzlich einen Fördervorgang in Richtung des Fördersegments 2' auslösen kann. Wenn nun dem Logikmodul 1 über dem ihm zugeordneten Sensor S mitgeteilt wird, dass sich auf dem Fördersegment 1' ein Objekt befindet, beaufschlagt das Logikmodul 1 den ihm zugeordneten Antrieb A des Fördersegments 1' solange, wie sich das auf dem Fördersegment 1' befindliche Objekt im Sichtbereich des dem Logikmodul 1 zugeordneten Sensors S befindet. Wenn das Objekt den Sichtbereich dieses Sensors S verlässt, schaltet das Logikmodul 1 den Antrieb A des Fördersegments 1' ab. Zu diesem Zeitpunkt erfasst der Sensor S, der am Logikmodul 2 angeschlossen ist, das Objekt, welches mittlerweile im Bereich des Fördersegments 2' zu liegen kommt, woraufhin das Logikmodul 2 den ihm zugeordneten Antrieb A des Fördersegments 2' beispielsweise so lange beaufschlagt, bis sich das Objekt mittig auf dem Fördersegment 2' befindet.
In entsprechender Weise findet dann ein Weiterfördern des Objekts vom Fördersegment 2' zum Weichensegment 13' dann statt, wenn dem Logikmodul 2 vom Weichentyp-Logikmodul 13 mitgeteilt wird, dass das Weichensegment 13' frei von Objekten ist. Dies erfährt das Weichentyp-Logikmodul 13 über den ihm zugeordneten Sensor S, der das Weichensegment 13' überwacht.

Der dem Weichentyp-Logikmodul 13 zugeordnete Sensor S kann zusätzlich zu einer reinen Erkennung des Vorhandenseins eines Objekts auch dazu in der Lage sein, einen auf dem Objekt befindlichen Code zu lesen, so dass dann der die Weichenfunktion steuernde Antrieb A₂ vom Weichentyp-Logikmodul 13 in Abhängigkeit vom gelesenen Code beaufschlagt werden kann. Folglich entscheidet dann das Weichentyp-Logikmodul 13 in Abhängigkeit vom gelesenen Code, ob ein vom Fördersegment 2' angeliefertes Objekt weiter zum Fördersegment 3' oder zum Fördersegment 4' gefördert werden soll.

Vorteilhaft an dem erfindungsgemäßen Ausführungsbeispiel gemäß Fig. 1 ist die Tatsache, dass es nur zwei unterschiedliche Typen 1 bis 5 bzw. 13 von Logikmodulen gibt und dass die Verbindung der einzelnen Logikmodule 1 bis 5, 13 untereinander und auch die Verbindung dieser Logikmodule 1 bis 5, 13 mit den ihnen zugeordneten Sensoren S und Antrieben A, A₁, A₂ mittels eines einheitlichen Verkabelungskonzepts realisiert sind.

Die Funktion des Fördersystems gemäß Fig. 2 entspricht im Wesentlichen der bereits erläuterten Funktionsweise des Fördersystems gemäß Fig. 1 mit dem Unterschied, dass gemäß Fig. 2 ein Weichensegment 14' eingesetzt wird, welches eine Merge-Funktion ausführt. Dementsprechend werden die Objektströme, die über die beiden parallel zueinander angeordneten Linearsegmente 6' bzw. 8', 9' angeliefert werden, mittels des Merge-Weichensegments 14' zu einem einheitlichen Objektstrom zusammengeführt, welcher über ein Linearsegment 10' vom Merge-Weichensegment 14' weggefördert wird. Allen Linearsegmenten 6' bis 10' sind wiederum Logikmodule 6 bis 10 vom Lineartyp zugeordnet, wohingegen dem Merge-Weichensegment 14' ein Logikmodul 14 vom Weichentyp zugeordnet ist. Im Unterschied zum Weichentyp-Logikmodul 13 gemäß Fig. 1 weist das Weichentyp-Logikmodul 14 gemäß Fig. 2 zwei Anschlüsse für Vorgänger-Logikmodule 7, 9 und nur einen Anschluss für ein Nachfolger-Logikmodul 10 auf.

Wenn die Weichentyp-Logikmodule 13, 14 mit bidirektionalen Schnittstellen für die Vorgänger- und Nachfolger-Logikmodule ausgestattet sind, ist es möglich, hier für das Weichentyp-Logikmodul 13 eine zum Weichentyp-Logikmodul 14 identische Hardware zu verwenden, obwohl beide Weichentyp-Logikmodule 13, 14 unterschiedliche Funktionen, nämlich zum einen eine Divert-Funktion (Fig. 1) und zum anderen eine Merge-Funktion (Fig. 2) ausführen. Das Logikmodul 13, 14 muss dann lediglich jeweils von dem zugeordneten, nicht dargestellten Steuerungsrechner entsprechend programmiert werden. Hardwareänderungen sind zur Ausführung der beiden genannten Funktionen jedoch nicht nötig, da alle drei Schnittstellen des Logikmoduls 13, 14 wahlweise sowohl für den Anschluss eines Vorgängerals auch für den Anschluss eines Nachfolger-Logikmoduls verwendet werden können.

Das erfindungsgemäße Konzept lässt sich auch bei einem Fördersystem gemäß Fig. 3 einsetzen, welches ausschließlich Linearsegmente 15', 11', 12' und 16' aufweist. Im Prinzip würde es hier genügen, jedem Fördersegment 15', 11', 12', 16' ein Logikmodul vom Lineartyp zuzuordnen. Wenn aber die bevorzugte erfindungsgemäße Ausführungsform zum Einsatz gelangen soll, bei der Konfigurations- und Parametrierinformation von einem Steuerungsrechner an die Logikmodule übermittelt wird, ist es nötig, zumindest einigen der Linearsegmente 15', 11', 12', 16' Logikmodule vom Weichentyp zuzuordnen, da diese im Unterschied zu den Logikmodulen vom Lineartyp dazu in der Lage sind, die genannte Information von einem Steuerungsrechner zu empfangen und an Logikmodule vom Lineartyp weiterzuleiten. In dem in Fig. 3 dargestellten Ausführungsbeispiel empfängt beispielsweise das Weichentyp-Logikmodul 16 Konfigurationsund Parametrierinformation vom Steuerungsrechner und überträgt diese Information an die Lineartyp-Logikmodule 11, 12, die in Förderrichtung vor dem Weichentyp-Logikmodul 16 angeordnet sind. Das Weichentyp-Logikmodul 15 überträgt entsprechende Informationen an diejenigen - nicht dargestellten - Lineartyp-Logikmodule, die in Förderrichtung vor dem Weichentyp-Logikmodul 15 vorgesehen sind.

### Bezugszeichenliste

- 1: Lineartyp-Logikmodul
- 1': Linearsegment
- 2: Lineartyp-Logikmodul
- 2': Linearsegment
- 3: Lineartyp-Logikmodul
- 3': Linearsegment
- 4: Lineartyp-Logikmodul
- 4': Linearsegment
- 5: Lineartyp-Logikmodul
- 5': Linearsegment
- 6: Lineartyp-Logikmodul
- 6': Linearsegment
- 7: Lineartyp-Logikmodul
- 7': Linearsegment
- 8: Lineartyp-Logikmodul
- 8': Linearsegment
- 9: Lineartyp-Logikmodul
- 9': Linearsegment
- 10: Lineartyp-Logikmodul
- 10': Linearsegment
- 11: Lineartyp-Logikmodul
- 11': Linearsegment
- 12: Lineartyp-Logikmodul
- 12': Linearsegment
- 13: Weichentyp-Logikmodul
- 13': Weichensegment (Divertfunktion)
- 14: Weichentyp-Logikmodul
- 14': Weichensegment (Merge-Funktion)
- 15: Weichentyp-Logikmodul
- 15': Linearsegment
- 16: Weichentyp-Logikmodul
- 16': Linearsegment
- S: Sensor
- A: Antrieb
- A₁: Antrieb
- A₂: Antrieb

## Patentansprüche

1. Fördersystem mit einer Mehrzahl von Fördersegmenten (1' - 16'), bei dem den Fördersegmenten (1' - 16') jeweils ein separates Logikmodul (1 - 16) zugeordnet ist, welches jeweils zumindest einen Sensoreingang und zumindest einen Steuerausgang für ein Antriebselement (A₁, A₂) des jeweiligen Fördersegments (1'- 16') aufweist, und bei dem als Fördersegmente Linearsegmente (1' - 12', 15', 16') und zumindest ein Weichensegment (13', 14') vorgesehen sind, wobei das dem Weichensegment (13', 14') zugeordnete Logikmodul (13, 14) einen zusätzlichen Steuerausgang für ein weiteres Antriebselement (A₂) aufweist, welches eine Merge- oder Divertfunktion steuert, **dadurch gekennzeichnet,**
**dass** zwei unterschiedliche Typen von Logikmodulen (1 - 16) vorgesehen sind, von denen ein Lineartyp (1 - 12) für die Ansteuerung von einem Linearsegment (1' - 12') und ein Weichentyp (13, 14) für die Ansteuerung von einem Weichensegment (13', 14') vorgesehen sind, und
**dass** die Sensoreingänge und/oder die Steuerausgänge für die Antriebselemente (A, A₁, A₂) bei allen Logikmodulen identisch ausgebildet sind.

2. Fördersystem nach Anspruch 1,
**dadurch gekennzeichnet,**
**dass** die physikalische Verbindung zwischen allen Sensoreingängen und den daran jeweils angeschlossenen Sensoren (5) und/oder die physikalische Verbindung zwischen allen Steuerausgängen und den daran jeweils angeschlossenen Antriebselementen (A, A₁, A₂) bei allen Logikmodulen (1 - 16) identisch ausgebildet sind.

3. Fördersystem nach einem der vorhergehenden Ansprüche,
**dadurch gekennzeichnet,**
**dass** alle Lineartyp-Logikmodule (1 - 12) eine untereinander identische Hardware aufweisen.

4. Fördersystem nach einem der vorhergehenden Ansprüche,
**dadurch gekennzeichnet,**
**dass** alle Weichentyp-Logikmodule (13 - 16) eine untereinander identische Hardware aufweisen oder dass zwei bezüglich ihrer Hardware unterschiedliche Weichentyp-Logikmodule existieren, von denen die einen zur Ansteuerung eines Merge-Weichensegments (14') und die anderen zur Ansteuerung eines Divert-Weichensegments (13') ausgelegt sind.

5. Fördersystem nach einem der vorhergehenden Ansprüche,
**dadurch gekennzeichnet,**
**dass** das Lineartyp-Logikrnodul (1 - 12) eine Schnittstelle für ein Vorgänger-Logikmodul und eine Schnittstelle für ein Nachfolger-Logikmodul aufweist.

6. Fördersystem nach einem der vorhergehenden Ansprüche,
**dadurch gekennzeichnet,**
**dass** das Weichentyp-Logikmodul (13 - 16) eine Schnittstelle für ein Vorgänger-Logikmodul und zumindest zwei Schnittstellen für zwei Nachfolger-Logikmodule und/oder zumindest zwei Schnittstellen für zwei Vorgänger-Logikmodule und eine Schnittstelle für ein Nachfolger-Logikmodul aufweist.

7. Fördersystem nach einem der vorhergehenden Ansprüche,
**dadurch gekennzeichnet,**
**dass** das Weichentyp-Logikmodul drei Schnittstellen für drei Nachfolger-Logikmodule und/oder drei Schnittstellen für drei Vorgänger-Logikmodule aufweist.

8. Fördersystem nach einem der Ansprüche 5 bis 7,
**dadurch gekennzeichnet,**
**dass** die Schnittstellen für die Vorgänger- und Nachfolger-Logikmodule bei allen Logikmodulen (1 - 16) identisch ausgebildet sind.

9. Fördersystem nach einem der vorhergehenden Ansprüche,
**dadurch gekennzeichnet,**
**dass** die physikalische Verbindung zwischen allen Paaren von zwei benachbarten Logikmodulen (1 - 16) identisch ausgebildet ist.

10. Fördersystem nach einem der vorhergehenden Ansprüche,
**dadurch gekennzeichnet,**
**dass** das Weichentyp-Logikmodul (13 - 16) eine Systemschnittstelle zur Kopplung mit einem Steuerungsrechner aufweist.

11. Fördersystem nach einem der vorhergehenden Ansprüche,
**dadurch gekennzeichnet,**
**dass** eine, mehrere oder alle der Schnittstellen der Logikmodule (1 - 16) unidirektional oder bidirektional betreibbar sind.

12. Fördersystem nach einem der vorhergehenden Ansprüche,
**dadurch gekennzeichnet,**
**dass** alle zwischen zwei Weichentyp-Logikmodulen (13 - 16) angeordneten Lineartyp-Logikmodule (1 - 12) dazu ausgelegt sind, Statusinformationen an nur ein gemeinsames Weichentyp-Logikmodul (13 - 16) zu übermitteln und/oder Parametrierinformation von einem gemeinsamen Weichentyp-Logikmodul (13 - 16) zu erhalten.

## Claims

1. A conveying system having a plurality of conveying segments (1' - 16'), wherein a respective separate logic module (1 - 16) is associated with each conveying segments (1' - 16') and in each case has at least one sensor input and at least one sensor output for a drive element (A₁, A₂) of the respective conveying segment (1' - 16'), and wherein linear segments (1' - 12', 15', 16') and at least one switch segment (13', 14') are provided as conveying segments, with the logic module (13, 14) associated with the switch segment (13', 14') having an additional control output for a further drive element (A₂) which controls a merge or divert function,
**characterised in that**
two different types of logic modules (1 - 16) are provided of which a linear type (1 - 12) is provided for the control of a linear segment (1' - 12') and a switch type (13, 14) is provided for the control of a switch segment (13', 14'); and
**in that** the sensor inputs and/or the sensor outputs for the drive elements (A, A₁, A₂) are designed as identical for all logic modules.

2. A conveying system in accordance with claim 1,
**characterised in that**
the physical connection between all the sensor inputs and the respective sensors (5) connected thereto and/or the physical connection between all the control outputs and the respective drive elements (A, A₁, A₂) connected thereto are designed as identical for all logic modules (1 - 16).

3. A conveying system in accordance with any one of the preceding claims,
**characterised in that**
all the linear type logic modules (1 - 12) have mutually identical hardware.

4. A conveying system in accordance with any one of the preceding claims,
**characterised in that**
all the switch type logic modules (13 - 16) have mutually identical hardware; or **in that** two switch type logic modules differing with respect to their hardware exist of which the one is designed for controlling a merge switch segment (14') and the other is designed for controlling a divert switch segment (13').

5. A conveying system in accordance with any one of the preceding claims,
**characterised in that**
the linear type logic module (1 - 12) has an interface for a preceding logic module and an interface for a subsequent logic module.

6. A conveying system in accordance with any one of the preceding claims,
**characterised in that**
the switch type logic module (13 - 16) has
an interface for a preceding logic module and at least two interfaces for two subsequent logic modules; and/or
at least two interfaces for two preceding logic modules and an interface for one subsequent logic module.

7. A conveying system in accordance with any one of the preceding claims,
**characterised in that**
the switch type logic module has three interfaces for three subsequent logic modules and/or three interfaces for three preceding logic modules.

8. A conveying system in accordance with any one of the claims 5 to 7, **characterised in that**
the interfaces for the preceding and subsequent logic modules are designed as identical for all logic modules (1 - 16).

9. A conveying system in accordance with any one of the preceding claims,
**characterised in that**
the physical connection between all the pairs of two adjacent logic modules (1 - 16) are designed as identical.

10. A conveying system in accordance with any one of the preceding claims,
**characterised in that**
the switch type logic module (13 - 16) has a system interface for coupling with a control computer.

11. A conveying system in accordance with any one of the preceding claims,
**characterised in that**
one interface, a plurality of interfaces or all interfaces of the logic modules (1 - 16) can be operated unidirectionally or bidirectionally.

12. A conveying system in accordance with any one of the preceding claims,
**characterised in that**
all the linear type logic modules (1 - 12) arranged between two switch type logic modules (13 - 16) are designed to transmit status information to only one common switch type logic module (13 - 16) and/or to obtain parameterising information from one common switch type logic module (13 - 16).

## Revendications

1. Système de convoyage comprenant une pluralité de segments de convoyage (1'-16'), dans lequel un module logique séparé (1-16) est associé à chacun des segments de convoyage (1'-16'), ce module comprenant respectivement au moins une entrée de capteur et au moins une sortie de commande pour un élément d'entraînement (A₁, A₂) du segment de convoyage respectif (1'-16'), et dans lequel il est prévu à titre de segments de convoyage des segments linéaires (1'-12', 15', 16') et au moins un segment d'aiguillage (13', 14'), dans lequel le module logique (13, 14) associé au segment d'aiguillage (13', 14') comprend une entrée de commande supplémentaire pour un autre élément d'entraînement (A₂) qui commande une fonction de regroupement ou de séparation,
**caractérisé en ce que**
il est prévu deux types différents de modules logiques (1-16) parmi lesquels il est prévu un type linéaire (1-12) pour le pilotage d'un segment linéaire (1'-12') et un type d'aiguillage (13, 14) pour le pilotage d'un segment d'aiguillage (13', 14'), et
**en ce que** les entrées de capteurs et/ou les sorties de commande pour les éléments d'entraînement (A, A₁, A₂) sont réalisées identiques dans tous les modules logiques.

2. Système de convoyage selon la revendication 1,
**caractérisé en ce que** la liaison physique entre toutes les entrées de capteurs et les capteurs respectifs qui y sont branchés (5) et/ou la liaison physique entre toutes les sorties de commande et les éléments d'entraînement respectifs qui y sont branchés (A, A₁, A₂) sont réalisées identiques pour tous les modules logiques (1-16).

3. Système de convoyage selon l'une des revendications précédentes, **caractérisé en ce que** tous les modules logiques de type linéaire (1-12) comportent un matériel identique les uns aux autres.

4. Système de convoyage selon l'une des revendications précédentes, **caractérisé en ce que** tous les modules logiques du type d'aiguillage (13-16) comportent un matériel identique les uns aux autres, ou **en ce qu'**il existe des modules logiques du type d'aiguillage différents quant à leur matériel, parmi lesquels les uns sont conçus pour piloter un segment d'aiguillage de regroupement (14') et les autres sont conçus pour le pilotage d'un segment d'aiguillage de séparation (13').

5. Système de convoyage selon l'une des revendications précédentes, **caractérisé en ce que** le module logique de type linéaire (1-12) comprend une interface pour un module logique précédent et une interface pour un module logique successif.

6. Système de convoyage selon l'une des revendications précédentes, **caractérisé en ce que** le module logique du type d'aiguillage (13-16) comprend une interface pour un module logique précédent et au moins deux interfaces pour deux modules logiques successifs et/ou au moins deux interfaces pour deux modules logiques précédents et une interface pour un module logique successif.

7. Système de convoyage selon l'une des revendications précédentes, **caractérisé en ce que** le module logique du type d'aiguillage comprend trois interfaces pour trois modules logiques successifs et/ou trois interfaces pour trois modules logiques précédents.

8. Système de convoyage selon l'une des revendications 5 à 7, **caractérisé en ce que** les interfaces pour les modules logiques précédents et les modules logiques successifs sont réalisées de manière identique dans tous les modules logiques (1-16).

9. Système de convoyage selon l'une des revendications précédentes, **caractérisé en ce que** la liaison physique entre toutes les paires de deux modules logiques voisins (1-16) est réalisée identique.

10. Système de convoyage selon l'une des revendications précédentes, **caractérisé en ce que** le module logique du type d'aiguillage (13-16) comprend une interface pour le couplage avec un calculateur de commande.

11. Système de convoyage selon l'une des revendications précédentes, **caractérisé en ce qu'**une, plusieurs, ou toutes les interfaces des modules logiques (1-16) sont susceptibles de fonctionner de manière unidirectionnelle ou bidirectionnelle.

12. Système de convoyage selon l'une des revendications précédentes, **caractérisé en ce que** tous les modules logiques du type linéaire (1-12) agencés entre deux modules logiques du type d'aiguillage (13-16) sont conçus pour transmettre des informations d'état seulement à un module logique du type d'aiguillage (13-16) commun et/ou pour recevoir des informations de paramétrage depuis un module logique du type d'aiguillage (13-16) commun.
